(19) Europäisches Patentamt
European Patent Office
Office européen des brevets

(11) **EP 3 410 402 A1**

(12) **EUROPEAN PATENT APPLICATION**

(43) Date of publication:
**05.12.2018 Bulletin 2018/49**

(51) Int Cl.:
***G06T 11/00*** *(2006.01)*

(21) Application number: **17305645.8**

(22) Date of filing: **02.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **PUY, Gilles**
**35576 Cesson-Sévigné (FR)**

• **DEMOULIN, Vincent**
**35576 Cesson-Sévigné (FR)**
• **AUTIER, Ingrid**
**35576 Cesson-Sévigné (FR)**
• **LEFEBVRE, Frédéric**
**35576 Cesson-Sévigné (FR)**

(74) Representative: **Vidon Brevets & Stratégie**
**16B, rue de Jouanet**
**BP 90333**
**35703 Rennes Cedex 7 (FR)**

(54) **METHOD FOR COLOR GRADING A VISUAL CONTENT AND CORRESPONDING ELECTRONIC DEVICE, ELECTRONIC ASSEMBLY, COMPUTER READABLE PROGRAM PRODUCT AND COMPUTER READABLE STORAGE MEDIUM**

(57)     The disclosure relates to a method comprising:
- iteratively determining a constraint on a source element of a source set of colors used in a source image, and a reference element of a reference set of colors used in a reference image;
- determining a color transform to be applied to the source image, the color transform being chosen by minimizing two of the constraints.

It also relates to a method comprising:
- selecting automatically candidate elements of a reference set of colors used in a reference image, the selecting depending on a position of a first source element of a source set of colors used in a source image, the selecting comprising:
• determining, for each element of the reference set, a subset of the source set by taking account of positions of elements of the source set relatively of the element of the reference set; and
• selecting candidate elements beyond elements of the reference set for which the subset comprises the first source element;

- using one of the candidate elements for color grading the source image.

It also relates to corresponding electronic devices, computer readable program products and storage media.

Figure 4A

**Description**

**1. Technical field**

The present disclosure relates to the field of color grading of digital visual content.
A method for color grading of the digital visual content, and corresponding electronic device, electronic assembly, computer readable program products and computer readable storage media are described.

**2. Background art**

Color grading is the process of altering and enhancing the color of, for example, a motion picture, video image, or still image, either electronically, photo-chemically or digitally. Modern color grading (color correction or remastering), for instance for theatrical film, video distribution, or print, is generally done digitally in a color suite.
Some color grading processing, usually known as color transfer, can be based on a reference (or exemplary) visual content. For instance, a user (like a visual artist or a user of an image processing device) can change the colors of a source image in order that it looks like the color characteristics (also called "color look") of a reference image, while preserving the content of the source image. The source image can be for instance a still image acquired from a camera of a smart phone or a tablet, or a frame of a video sequence.

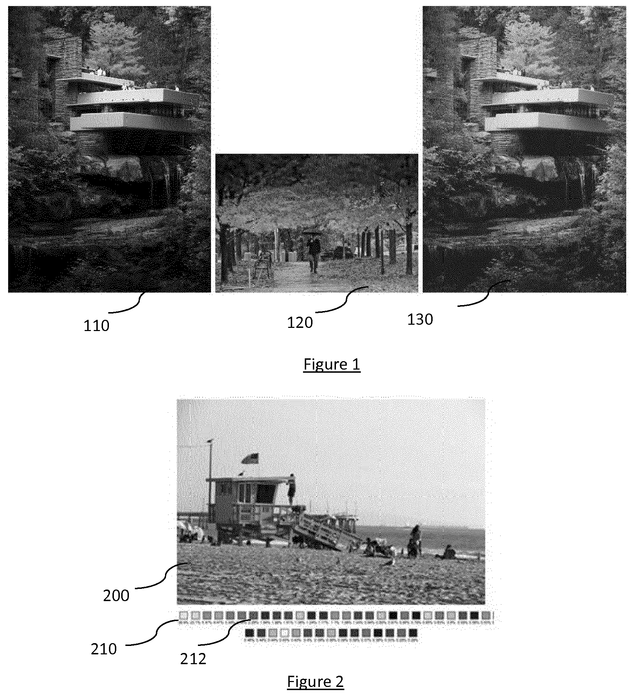

Figure 1 illustrates an application of a Color transfer on a source image 110 (left) based on a reference image 120 (middle). The resulting image 130 is presented on the right.
It is of interest to propose techniques that permit enhancing the user experience of a color grading device, compared to some prior art color grading solutions.

**3. Summary**

The present principles enable at least some disadvantages to be resolved by proposing a method comprising:

- iteratively determining a constraint on at least one source element of a source color set, said source color set being representative of at least one color used in a source frame, and at least one reference element of at least one reference color set, said reference color set being representative of at least one color used in at least one reference frame;
- determining a global color transform to be applied to said source frame, said global color transform being chosen by minimizing at least two of said determined constraints.

Notably, the two constraints can be determined in two different iterations.
The method can be performed for instance in an electronic device.
According to an embodiment of the present disclosure, said at least one source frame is a source frame of a visual content.
According to an embodiment of the present disclosure, said at least one reference frame is a reference frame of a reference visual content.
According to an embodiment of the present disclosure, the method can be used for color grading said at least one source frame according to said at least one reference frame.
It is to be understood that a visual content may include visual items, like images, pictures, photos, drawings, frames or groups of pixels from a video, movie or a collection of stills. A visual content may also include other data, for instance audio and/or metadata.
Depending upon embodiments of the present disclosure, said source frame and said reference frame can be part of a same visual content or of different visual contents.
According to an embodiment of the present disclosure, said source visual content and/or said reference visual content is a video sequence.
According to an embodiment of the present disclosure, said source frame and/or said reference frame is a still image.
According to an embodiment of the present disclosure, determining a constraint comprises mapping said source element to said reference element.
According to an embodiment of the present disclosure, said at least two determined constraints relate to at least two distinct source elements.
According to an embodiment of the present disclosure, the method comprises color grading said source frame by applying said global transform, said color grading resulting in a color-graded frame, and rendering said color-graded frame.

According to an embodiment of the present disclosure, said determining of a global color transform is performed iteratively and said method comprises color grading said source frame by applying said iteratively determined global transforms, each of said color grading resulting in a color-graded frame, and rendering said color-graded frames.

In some embodiments, successive renderings can be performed. In other embodiments, several renderings can be performed at the same time.

According to an embodiment of the present disclosure, the method comprises:

- selecting automatically at least one candidate element of said reference color set according to said at least one source element of said source color set;
- obtaining said reference element from said at least one candidate element.

Notably, in some embodiments, said selecting can be performed without requiring any input from a user interface.

According to an embodiment of the present disclosure, the method comprises rendering said candidate element of a user interface of said device.

According to an embodiment of the present disclosure said selecting of said candidate element comprises:

- determining, for each element of said reference color set, a subset of said source color set, said determining taking account of positions, in a color space, of elements of said source color set relatively to said each element of said reference color set; and
- selecting said candidate element beyond elements of said reference color set for which the determined subset comprises said source element.

According to an embodiment of the present disclosure, the method comprises:

- rendering said at least one selected candidate element on a user interface of said electronic device;
- obtaining said reference element, beyond said at least one selected candidate elements, from said user interface.

According to an embodiment of the present disclosure, said source and/or said reference color set is obtained using an Automatic Color Palette (ACoPa) algorithm.

According to another aspect, the present disclosure relates to an electronic device comprising at least one processor.

According to an embodiment of the present disclosure, said at least one processor is configured for:

- iteratively determining a constraint on at least one source element of a source color set, said source color set being representative of at least one color used in a source frame, and at least one reference element of at least one reference color set, said reference color set being representative of at least one color used in at least one reference frame;
- determining a global color transform to be applied to said source frame, said global color transform being chosen by minimizing at least two of said determined constraints.

Notably, the two constraints can be determined in two different iterations.

According to an embodiment of the present disclosure, said at least one source frame is a source frame of a visual content.

According to an embodiment of the present disclosure, said at least one reference frame is a reference frame of a reference visual content.

According to an embodiment of the present disclosure, said at least one processor is adapted for color grading said at least one source frame according to said at least one reference frame.

According to an embodiment of the present disclosure, said processor is adapted for:

- rendering said source color set on a user interface of said electronic device;
- obtaining said source element from said user interface.

According to an embodiment of the present disclosure, said processor is adapted for:

- rendering said reference color set on a user interface of said electronic device;
- obtaining said reference element from said user interface.

According to an embodiment of the present disclosure, said processor is adapted for:

- selecting automatically at least one candidate element of said reference color set according to said at least one source element of said source color set;
- obtaining said reference element amongst said at least one candidate element.

Selecting automatically can for instance be understand as selecting without any input from a user interface, or at least without any designation, acquired from a user interface, of the candidate element.

According to an embodiment of the present disclosure, said processor is adapted for rendering said candidate element on a user interface of said electronic device.

According to an embodiment of the present disclosure, said selecting of said candidate reference element takes into account a numeric value acquired from said user interface.

According to an embodiment of the present disclosure, said numeric value is computed from a position of a variable cursor rendered of said user interface.

Said numeric value can notably be computed prior to said selecting.

While not explicitly described, the communication device of the present disclosure can be adapted to perform the method of the present disclosure in any of its embodiments.

According to another aspect, the present disclosure relates to an electronic device comprising at least one memory and at least one processing circuitry.

According to an embodiment of the present disclosure, said at least one processing circuitry is adapted for

- iteratively determining a constraint on at least one source element of a source color set, said source color set being representative of at least one color used in a source frame, and at least one reference element of at least one reference color set, said reference color set being representative of at least one color used in at least one reference frame;
- determining a global color transform to be applied to said source frame, said global color transform being chosen by minimizing at least two of said determined constraints.

According to an embodiment of the present disclosure, said at least one source frame is a source frame of a visual content.

According to an embodiment of the present disclosure, said at least one reference frame is a reference frame of a reference visual content.

According to an embodiment of the present disclosure, said at least one processing circuitry is adapted for color grading said at least one source frame according to said at least one reference frame.

According to an embodiment of the present disclosure, said at least one processing circuitry is adapted for:

- rendering said source color set on a user interface of said electronic device;
- obtaining said source element from said user interface.

According to an embodiment of the present disclosure, said at least one processing circuitry is adapted for:

- rendering said reference color set on a user interface of said electronic device;
- obtaining said reference element from said user interface.

According to an embodiment of the present disclosure, said at least one processing circuitry is adapted for:

- selecting automatically at least one candidate element of said reference color set according to said at least one source element of said source color set;
- obtaining said reference element amongst said at least one candidate element.

Selecting automatically can for instance be understand as selecting without any input from a user interface, or at least without any designation, acquired from a user interface, of the candidate element.

According to an embodiment of the present disclosure, said at least one processing circuitry is adapted for rendering said candidate element on a user interface of said electronic device.

According to an embodiment of the present disclosure, said selecting of said candidate reference element takes into account a numeric value acquired from said user interface.

According to an embodiment of the present disclosure, said numeric value is computed from a position of a variable cursor rendered of said user interface.

Said numeric value can notably be computed prior to said selecting.

While not explicitly described, the electronic device of the present disclosure can be adapted to perform the method of the present disclosure in any of its embodiments.

According to another aspect, the present disclosure relates to a communication system comprising an electronic device of the present disclosure in any of its embodiments.

According to another aspect, the present disclosure relates to an electronic assembly comprising:

- a first electronic device comprising at least one processor;
- at least one second electronic device adapted to be coupled to said first electronic device.

According to an embodiment of the present disclosure, said at least one processor of said first electronic device is configured for:

- iteratively determining a constraint on at least one source element of a source color set, said source color set being representative of at least one color used in a source frame, and at least one reference element of at least one reference color set, said reference color set being representative of at least one color used in at least one reference frame;
- determining a global color transform to be applied to said source frame, said global color transform being chosen by minimizing at least two of said determined constraints.

The second device can be for instance a display, an acquiring device or a communication device coupled to the first device.

Herein, the term 'coupled' is defined to mean directly connected to or indirectly connected with through one or more intermediate components. Such intermediate components may include both hardware and software based components.

According to an embodiment of the present disclosure, said at least one reference frame is a reference frame of a reference visual content.

According to an embodiment of the present disclosure, said at least one processing circuitry is adapted for color grading said at least one source frame according to said at least one reference frame.

While not explicitly described, the electronic assembly of the present disclosure can comprise a first electronic device adapted to perform the method of the present disclosure in any of its embodiments.

According to another aspect, the present disclosure proposes a method comprising:

- determining, for each element of a first set, a subset of a second set, said determining taking account of positions of elements of said second set relatively to said each element of said first set; and
- selecting at least one first element beyond elements of said first set for which the determined subset comprises a second element.

The method can be performed for instance in an electronic device.

According to an embodiment of the present disclosure, said first set of elements and said second set of elements belong to a same geometrical space.

According to an embodiment of the present disclosure, the determining takes into account a distance between elements of said second set and said each element of said first set.

According to an embodiment of the present disclosure, said subset of said second set comprises elements of said second set having a distance with said each element of said first set being less than a first value.

Such a method can be applied in many technical fields. More precisely, in the field of color processing, the present principles can also enable at least some disadvantages to be resolved by proposing a method, to be performed in an electronic device, for color grading a source frame according to a reference frame.

According to an embodiment of the present disclosure, the method comprises:

- selecting automatically at least one candidate element of a reference color set of elements of a color space representative of at least one color used in the reference frame, said selecting depending on a position of a first source element of a source color set of elements of said color space representative of at least one color used in the source frame, said selecting comprising:

    • determining, for each element of said reference color set, a subset of said source color set, said determining taking account of positions of elements of said source color set relatively of said each element of said reference color set; and
    • selecting said candidate element beyond elements of said reference color set for which the determined subset comprises said first source element;

- using one of said candidate element for color grading said source frame.

The method can be performed for instance in an electronic device.

According to an embodiment of the present disclosure, said at least one source frame is a source frame of a visual content.

According to an embodiment of the present disclosure, said at least one reference frame is a reference frame of a reference visual content.

It is to be understood that a visual content may include visual items, like images, pictures, photos, drawings, frames or groups of pixels from a video, movie or a collection of stills. A visual content may also include other data, for instance audio and/or metadata.

According to an embodiment of the present disclosure, the method can be used for color grading said at least one source frame according to said at least one reference frame.

Said selecting can notably be performed without any input from a user interface.

Said source frame and/or said reference frame can notably be a still image and/or a frame of a visual content.

According to an embodiment of the present disclosure, the determining takes into account a distance between elements of said reference color set and said each element of said source color set.

According to an embodiment of the present disclosure, said subset of said source color set comprises elements of said source color set having a distance with said each element of said reference color set being less than a first value.

According to an embodiment of the present disclosure, the method comprises:

- rendering a source palette corresponding to said source color set on a user interface of said electronic device;
- obtaining said first source element from said user interface.

According to an embodiment of the present disclosure, the method comprises color grading said source frame by applying, to at least one part of said source frame having the color represented by said first source element, a grading color represented by one of said at least one candidate element.

According to an embodiment of the present disclosure, the method comprises:

- rendering said selected at least one candidate element on a user interface of said electronic device;
- obtaining said grading color, beyond colors represented by said selected candidate elements, from said user interface.

According to an embodiment of the present disclosure, said color grading is based on a LUT chosen in order to minimize the distance between said at least one first source element and said at least one selected candidate elements.

In other words, said color grading is based on a LUT chosen in order to minimize the transport cost or constraints.

According to an embodiment of the present disclosure, the method comprises varying a number of candidate elements selected thanks to said user interface.

Said varying can comprise acquiring a numeric value from said user interface, like a threshold value, defining maximum distance allowed between said first candidate element and said source element and/or said second candidate element.

Said numeric value can notably be acquired thanks to a variable cursor of said user interface, whose position can be varied by a user.

According to an embodiment of the present disclosure, said source and/or said reference color set is obtained using an ACoPa algorithm.

According to another aspect, the present disclosure relates to an electronic device comprising at least one processor.

According to an embodiment of the present disclosure, said at least one processor is configured for selecting at least one first element beyond a first set of elements depending on a position of a second element of a second set of elements.

According to an embodiment of the present disclosure, said first set of elements and said second set of elements belong to a same geometrical space.

According to an embodiment of the present disclosure, the selecting comprises:

- determining, for each element of said first set, a subset of said second set, said determining taking account of positions of elements of said second set relatively to said each element of said first set; and
- selecting said first element beyond elements of said first set for which the determined subset comprises said second element.

According to an embodiment of the present disclosure, the determining takes into account a distance between elements of said second set and said each element of said first set.

According to an embodiment of the present disclosure, said subset of said second set comprises elements of said second set having a distance with said each element of said first set being less than a first value.

Such a device can be adapted to be used in many technical fields. More precisely, according to an embodiment of the present disclosure, adapted to the field of color processing, said at least one processor is configured for color grading a source frame according to a reference frame.

According to an embodiment of the present disclosure, said at least one processor is adapted for:

- selecting automatically at least one candidate element of a reference color set of elements of a color space representative of at least one color used in the reference frame, said selecting depending on a position of a first source element of a source color set of elements of said color space representative of at least one color used in the source frame, said selecting comprising:

  • determining, for each element of said reference color set, a subset of said source color set, said determining taking account of positions of elements of said source color set relatively of said each element of said reference color set; and
  • selecting said candidate element beyond elements of said reference color set for which the determined subset comprises said first source element;

- using one of said candidate element for color grading said source frame.

Said selecting can notably be performed without any input from a user interface.

Said source frame and/or said reference frame can notably be a still image and/or a frame of a visual content.

According to an embodiment of the present disclosure, the determining takes into account a distance between elements of said reference color set and said each element of said source color set.

According to an embodiment of the present disclosure, said subset of said source color set comprises elements of said source color set having a distance with said each element of said reference color set being less than a first value.

According to an embodiment of the present disclosure, said at least one processor is adapted for:

- rendering a source palette corresponding to said source color set on a user interface of said electronic device;
- obtaining said first source element from said user interface.

According to an embodiment of the present disclosure, said at least one processor is adapted for color grading said source frame by applying, to at least one part of said source frame having the color represented by said first source element, a grading color represented by one of said at least one candidate element.

According to an embodiment of the present disclosure, said at least one processor is adapted for:

- rendering said selected at least one candidate element on a user interface of said electronic device;
- obtaining said grading color, beyond colors represented by said selected candidate elements, from said user interface.

According to an embodiment of the present disclosure, said color grading is based on a LUT chosen in order to minimize the distance between said at least one first source element and said at least one selected candidate elements.

In other words, said color grading is based on a LUT chosen in order to minimize the transport cost or constraints.

According to an embodiment of the present disclosure, said at least one processor is adapted for varying a number of candidate elements selected thanks to said user interface.

Said varying can comprise acquiring a numeric value from said user interface, like a threshold value, defining maximum distance allowed between said first candidate element and said source element and/or said second candidate element.

Said numeric value can notably be acquired thanks to a variable cursor of said user interface, whose position can be varied by a user.

According to an embodiment of the present disclosure, said source and/or said reference color set is obtained using an Acopa algorithm.

While not explicitly described, the communication device of the present disclosure can be adapted to perform at least one of the methods of the present disclosure in any of its embodiments.

According to another aspect, the present disclosure relates to an electronic device comprising at least one memory and at least one processing circuitry.

According to an embodiment of the present disclosure, said at least one processing circuitry is configured for selecting at least one first element beyond a first set of elements depending to a position of a second element of a second set of elements.

According to an embodiment of the present disclosure, said first and/or said second set of elements belong to a same geometrical space

According to an embodiment of the present disclosure, the selecting comprises:

determining, for each element of said first set, a subset of said second set, said determining taking account of positions of elements of said second set relatively to said each element of said first set; and

selecting said first element beyond elements of said first set for which the determined subset comprises said second element.

According to an embodiment of the present disclosure, the determining takes into account a distance between elements of said second set and said each element of said first set.

According to an embodiment of the present disclosure, said subset of said second set comprises elements of said second set having a distance with said each element of said first set being less than a first value.

Such a device can be adapted to be used in many technical fields. More precisely, according to an embodiment of the present disclosure, adapted to the field of color processing, said at least one processing circuitry is configured for color grading a source frame according to a reference frame.

According to an embodiment of the present disclosure, said at least one processing circuitry is configured for:

- selecting automatically at least one candidate element of a reference color set of elements of a color space representative of at least one color used in the reference frame, said selecting depending on a position of a first source element of a source color set of elements of said color space representative of at least one color used in the source frame, said selecting comprising:

  • determining, for each element of said reference color set, a subset of said source color set, said determining taking account of positions of elements of said source color set relatively of said each element of said reference color set; and
  • selecting said candidate element beyond elements of said reference color set for which the determined subset comprises said first source element;

- using one of said candidate element for color grading said source frame.

Said selecting can notably be performed without any input from a user interface.

Said source frame and/or said reference frame can notably be a still image and/or a frame of a visual content.

According to an embodiment of the present disclosure, the determining takes into account a distance between elements of said reference color set and said each element of said source color set.

According to an embodiment of the present disclosure, said subset of said source color set comprises elements of said source color set having a distance with said each element of said reference color set being less than a first value.

According to an embodiment of the present disclosure, said at least one processing circuitry is configured for:

- rendering a source palette corresponding to said source color set on a user interface of said electronic device; obtaining said first source element from said user interface.

According to an embodiment of the present disclosure, said at least one processor is adapted for color grading said source frame by applying, to at least one part of said source frame having the color represented by said first source element, a grading color represented by one of said at least one candidate element.

According to an embodiment of the present disclosure, said at least one processing circuitry is configured for:

- rendering said selected at least one candidate element on a user interface of said electronic device;
- obtaining said grading color, beyond colors represented by said selected candidate elements, from said user interface.

According to an embodiment of the present disclosure, said color grading is based on a LUT chosen in order to minimize the distance between said at least one first source element and said at least one selected candidate elements.

In other words, said color grading is based on a LUT chosen in order to minimize the transport cost or constraints.

According to an embodiment of the present disclosure, said at least one processing circuitry is adapted for varying a number of reference elements selected thanks to said user interface.

Said varying can notably be performed thanks to a cursor of said user interface, like a cursor associated with a threshold value, defining maximum distance allowed between said first candidate element and said source element and/or said second candidate element.

According to an embodiment of the present disclosure, said source and/or said reference color set is obtained using an Acopa algorithm.

While not explicitly described, the electronic device of the present disclosure can be adapted to perform at least one of the methods of the present disclosure in any of its embodiments.

According to another aspect, the present disclosure relates to a communication system comprising an electronic device of the present disclosure in any of its embodiments. According to another aspect, the present disclosure relates to an electronic assembly comprising:

- a first electronic device comprising at least one processor;
- at least one second electronic device adapted to be coupled to said first electronic device.

According to an embodiment of the present disclosure, said at least one processor of said first electronic device is configured for selecting at least one first element beyond a first set of elements depending to a position of a second element of a second set of elements.

According to an embodiment of the present disclosure, said first and/or said second set of elements belong to a same geometrical space

According to an embodiment of the present disclosure, the selecting comprises:

- determining, for each element of said first set, a subset of said second set, said determining taking account of positions of elements of said second set relatively to said each element of said first set; and
- selecting said first element beyond elements of said first set for which the determined subset comprises said second element.

According to an embodiment of the present disclosure, the determining takes into account a distance between elements of said second set and said each element of said first set.

According to an embodiment of the present disclosure, said subset of said second set comprises elements of said second set having a distance with said each element of said first set being less than a first value.

According to an embodiment of the present disclosure, adapted to the field of color processing, said at least one processor of said first electronic device is configured for color grading a source frame according to a reference frame.

According to an embodiment of the present disclosure, said at least one processor of said first electronic device is configured for:

- selecting automatically at least one candidate element of a reference color set of elements of a color space representative of at least one color used in the reference frame, said selecting depending on a position of a first source element of a source color set of elements of said color space representative of at least one color used in the source frame, said selecting comprising:

  • determining, for each element of said reference color set, a subset of said source color set, said determining taking account of positions of elements of said source color set relatively of said each element of said reference color set; and
  • selecting said candidate element beyond elements of said reference color set for which the determined subset comprises said first source element;

- using one of said candidate element for color grading said source frame.

Said selecting can notably be performed without any input from a user interface.

Said source frame and/or said reference frame can notably be a still image and/or a frame of a visual content like a video content.

According to an embodiment of the present disclosure, the determining takes into account a distance between elements of said reference color set and said each element of said source color set.

According to an embodiment of the present disclosure, said subset of said source color set comprises elements of said source color set having a distance with said each element of said reference color set being less than a first value.

According to an embodiment of the present disclosure, said at least one processor of said first electronic device is configured for:

- rendering a source palette corresponding to said source color set on a user interface of said electronic device; obtaining said first source element from said user interface.

According to an embodiment of the present disclosure, said at least one processor of said first electronic device is configured for color grading said source frame by applying, to at least one part of said source frame having the color represented by said first source element, a grading color represented by one of said at least one candidate element.

According to an embodiment of the present disclosure, said at least one processor of said first electronic device is configured for:

- rendering said selected at least one candidate element on a user interface of said electronic device;
- obtaining said grading color, beyond colors represented by said selected candidate elements, from said user interface.

According to an embodiment of the present disclosure, said color grading is based on a LUT chosen in order to minimize the distance between said at least one first source element and said at least one selected candidate elements.

The second device can be for instance a display, an acquiring device or a communication device coupled to the first device.

While not explicitly described, the present embodiments related to a method or to the corresponding electronic device, electronic assembly or system can be employed in any combination or sub-combination.

For example, some embodiments of the methods of the present disclosure can involve a method, to be performed in an electronic device, for color grading at least one source frame of a visual content according to at least one reference frame of a reference visual content, said method comprising:

- iteratively determining a constraint on at least one source element of a source color set, said source color set comprising elements, of a color space, representative of at least one color used in the source frame, and at least one reference element of at least one reference color set, said reference color set comprising elements, of said color space, being representative of at least one color used in at least one of said at least one reference frame, said determining comprising
- selecting automatically at least one candidate element of said reference color set, said selecting depending on a position of a first source element of said source color set, said selecting comprising:

  • determining, for each element of said reference color set, a subset of said source color set, said determining taking account of positions of elements of said source color set relatively of said each element of said reference color set; and
  • selecting said candidate element beyond elements of said reference color set for which the determined subset comprises said first source element;

    - rendering said at least one selected candidate element on a user interface of said electronic device;
    - obtaining said reference element, beyond said at least one selected candidate elements, from said user interface;

- determining a global color transform to be applied to said source frame, said global color transform being chosen by minimizing at least two of said determined constraints.

According to another aspect, the present disclosure relates to a non-transitory program storage product, readable by a computer.

According to an embodiment of the present disclosure, said non-transitory computer readable program product tangibly embodies a program of instructions executable by a computer to perform at least one of the methods of the present disclosure in any of its embodiments.

According to an embodiment of the present disclosure, said non-transitory computer readable program product tangibly embodies a program of instructions executable by a computer for performing, when said non-transitory software program is executed by a computer, a method for color grading at least one source frame of a visual content according to at least one reference frame of a reference visual content, said method comprising:

- iteratively determining a constraint on at least one source element of a source color set, said source color set being representative of at least one color used in the source frame, and at least one reference element of at least one reference color set, said reference color set being representative of at least one color used in at least one of said at least one reference frame;
- determining a global color transform to be applied to said source frame, said global color transform being chosen by minimizing at least two of said determined constraints.

According to an embodiment of the present disclosure, said non-transitory computer readable program product tangibly embodies a program of instructions executable by a computer for performing, when said non-transitory software program is executed by a computer, a method comprising:

- determining, for each element of a first set, a subset of a second set, said determining taking account of positions of elements of said second set relatively to said each element of said first set; and
- selecting at least one first element beyond elements of said first set for which the determined subset comprises a second element.

According to an embodiment of the present disclosure, said first and/or said second set of elements belong to a same geometrical space

According to an embodiment of the present disclosure, said non-transitory computer readable program product tangibly embodies a program of instructions executable by a computer for performing, when said non-transitory software program is executed by a computer, a method, to be performed in an electronic device, for color grading a source frame according to a reference frame, the method comprising:

- selecting automatically at least one candidate element of a reference color set of elements of a color space representative of at least one color used in the reference frame, said selecting depending on a position of a first source element of a source color set of elements of said color space representative of at least one color used in the source frame, said selecting comprising:

  • determining, for each element of said reference color set, a subset of said source color set, said determining taking account of positions of elements of said source color set relatively of said each element of said reference color set; and
  • selecting said candidate element beyond elements of said reference color set for which the determined subset comprises said first source element;

- using one of said candidate element for color grading said source frame.

According to another aspect, the present disclosure relates to a computer readable storage medium carrying a software program comprising program code instructions for performing a least one of the methods of the present disclosure, in any of its embodiments, when said non-transitory software program is executed by a computer.

According to an embodiment of the present disclosure, said computer readable storage medium tangibly embodies a program of instructions executable by a computer for performing, when said non-transitory software program is executed by a computer, a method for color grading at least one source frame of a visual content according to at least one reference frame of a reference visual content, said method comprising:

- iteratively determining a constraint on at least one source element of a source color set, said source color set being representative of at least one color used in the source frame, and at least one reference element of at least one reference color set, said reference color set being representative of at least one color used in at least one of said at least one reference frame;
- determining a global color transform to be applied to said source frame, said global color transform being chosen by minimizing at least two of said determined constraints.

According to an embodiment of the present disclosure, said computer readable storage medium tangibly embodies a program of instructions executable by a computer for performing, when said non-transitory software program is executed by a computer, a method comprising:

- determining, for each element of a first set, a subset of a second set, said determining taking account of positions of elements of said second set relatively to said each element of said first set; and
- selecting at least one first element beyond elements of said first set for which the determined subset comprises a second element.

According to an embodiment of the present disclosure, said computer readable storage medium tangibly embodies a program of instructions executable by a computer for performing, when said non-transitory software program is executed by a computer, a method, to be performed in an electronic device, for color grading a source frame according to a reference frame, the method comprising:

- selecting automatically at least one candidate element of a reference color set of elements of a color space representative of at least one color used in the reference frame, said selecting depending on a position of a first source element of a source color set of elements of said color space representative of at least one color used in the source frame, said selecting comprising:

    • determining, for each element of said reference color set, a subset of said source color set, said determining taking account of positions of elements of said source color set relatively of said each element of said reference color set; and
    • selecting said candidate element beyond elements of said reference color set for which the determined subset comprises said first source element;

- using one of said candidate element for color grading said source frame.

**4. List of drawings.**

The present disclosure can be better understood, and other specific features and advantages can emerge upon reading the following description, the description making reference to the annexed drawings wherein:

- Figure 1 illustrates an image resulting from a color transfer applied on an exemplary source image based on a reference image;
- Figure 2 illustrates an exemplary graphical representation of a color palette associated with an image;
- Figure 3 illustrates an exemplary electronic device according to at least one embodiment of the present disclosure;
- Figures 4A, 4B and 4C illustrate an exemplary embodiment of one of the methods of present disclosure;
- Figure 5 illustrates an exemplary color mapping constraint between color bins of two color palettes;
- Figure 6 illustrates an exemplary embodiment of one of the methods of the present disclosure.

It is to be noted that the drawings have only an illustration purpose and that the embodiments of the present disclosure are not limited to the illustrated embodiments.

**5. Detailed description of the embodiments.**

At least some principles of the present disclosure relate to color grading of at least one frame of at least one input visual content by using at least one reference frame of at least one reference visual content.
In at least some embodiments, the color grading can be based on frames from a same or different reference visual contents.
The input visual content is also called hereinafter "source" visual content. Accordingly, the frame (or image) of the input visual content is also called hereinafter "input frame" or "source frame", or "input image" or "source image".
Similarly, a visual content to be used as a reference, or example, is also called hereinafter "reference visual content" and a frame of the reference visual content is also called hereinafter "reference frame" or "reference image").
A color transformation, like a color transfer, can be performed by using a Color Look Up Table (LUT). A color LUT is a color mapping representation, or view, that describes how the colors, represented for instance by a position (or bin) in a color space (like the "Red Green Blue" (RGB) color space), are transformed (or in other words mapped). When a user wants to give a color look to an image, he can apply a corresponding color LUT on this image so that all the RGB color pixels in this image are mapped to new RGB values as defined in the LUT.
At least one embodiment of the present disclosure aims to help create a color lookup table (LUT) that transforms colors of the at least one source image, or frame, to give it the look, or appearance, desired by a user, e.g., a professional user, like colorist, or domestic user, like a user of an image processing device.
According to at least one embodiment of the present disclosure, the creation of this LUT can be done by using a source image (or frame) that the user wish to grade (i.e., modify its colors/look) and one or multiple reference images (frames) that serve as look examples. The creation of the LUT can be performed automatically, without any indication of a user. On the other hand, in at least some embodiments, the method of the present disclosure can comprise at least one interactive step with a user. Such embodiments can be adapted to help take into account the user's willingness and can thus permit a good user experience.
For instance, some embodiments can permit a user to impose some color mapping constraints, e.g., what shades of colors in the source image should map to what shades of colors in the reference images. In at least some embodiments, the mapping between the original colors and desired colors can be computed automatically while respecting some constraints defined by at least one user (and relating for instance to some particular colors).

In some embodiments of the present disclosure, a generation or determination of a color LUT can be performed by several users. For instance, a photography director can define some constraints at a global level (for instance for all frames of a source movie), some other constraints being built by some colorists in charge of a particular scene (or shot) of the same movie.

In at least some embodiments, the method of the present disclosure can comprise at least one iterative step, regarding notably the definition of color constraints.

For instance, in some embodiments, the method can comprise both interactive and iterative steps regarding the creation of the LUT, thus allowing a user to progressively construct the desired look. For instance, some parts of the method of the present disclosure (like the obtaining of at least one reference frame and the determining of a constraint based on this reference frame) can be repeated multiple times by adding new constraints -- or by removing some constraints - based on different reference frames until the desired look is obtained.

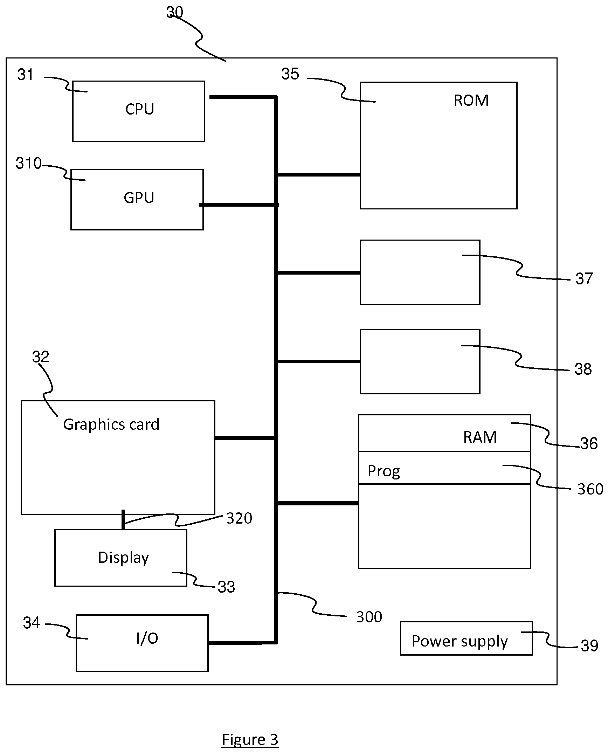

Figure 3 describes the structure of an exemplary electronic device 30 configured notably to perform any of the embodiments of at least one of the methods of the present disclosure.

It is to be pointed out that the elements, or modules, or blocks, of the functional structure illustrated in figure 3 can be implemented using software components stored in memory and executed by a processor or CPU of the electronic device and/or using hardware components of the electronic device. At least some elements illustrated by figure 3 can comprise both at least one software component and at least one hardware component of the communication device.

The electronic device can be any image and/or video content acquiring device, like a smart phone or a camera. It can also be a device without any video acquiring capabilities but with image and/or video processing capabilities. For instance, in some embodiment, the electronic device can comprise a communication interface, like a receiving interface to receive a visual content (for instance a still image and/or a video sequence), like a reference video content or an input video content to be processed according to at least one of the methods of the present disclosure. This communication interface is optional. Indeed, in some embodiments, the electronic device can process visual contents, like input and/or reference contents stored in a medium readable by the electronic device, received or acquired by the electronic device.

In the exemplary embodiment of figure 3, the electronic device 30 can include different devices, linked together via a data and address bus 300, which can also carry a timer signal. For instance, it can include a micro-processor 31, 310 (or CPU), notably a Graphic Processing Unit (GPU) 310 (Optional), a graphics card 32 (depending on embodiments, such a card may be optional), at least one Input/ Output module 34, (like a keyboard, a mouse, a led, and so on), a ROM (or "Read Only Memory") 35, a RAM (or "Random Access Memory") 36.

In the exemplary embodiment of figure 3, the electronic device can also comprise at least one communication interface 37 configured for the reception and/or transmission of data, notably image and/or video data, via a wireless coupling (notably of type WIFI® or Bluetooth®), at least one wired communication interface 38, a power supply 39. Those communication interfaces are optional.

In some embodiments, the electronic device 30 can also include, or be coupled to, at least one display module 33, for instance a screen, directly coupled to the graphics card 32 by a dedicated bus 320. Such a display module can be used for instance in order to output (either graphically, or textually) information, as described hereinafter in link with the rendering steps of at least one of the methods of the present disclosure.

It is to be noted that in some embodiments, the electronic device can include several display modules. For instance, a first display module of the electronic device can be used for rendering a source image to be color graded, a second display module of the electronic device can be used for rendering a reference image to be used as an exemplar for the color grading of the source image and a third display module of the electronic device can be used for rendering an output image being the image resulting from the color grading of the source image. When several reference images can be used for color grading a same source image, several reference images can be rendered simultaneously, on a common display (for instance in several windows of a same display) or on different displays of the electronic devices.

In the illustrated embodiment, the electronic device 30 can communicate with another device (like a server or camera) or with one of the display thanks to a wireless interface 37.

Each of the mentioned memories can include at least one register, that is to say a memory zone of low capacity (a few binary data) or high capacity (with a capability of storage of an entire audio and/or video file notably).

When the electronic device 30 is powered on, the microprocessor 31 loads the program instructions 360 in a register of the RAM 36, notably the program instruction needed for performing at least one embodiment of at least one of the methods described herein, and executes the program instructions.

According to a variant, the electronic device 30 includes several microprocessors.

According to another variant, the power supply 39 is external to the electronic device 30.

In the exemplary embodiment illustrated in figure 3, the microprocessor 31 can be configured for selecting at least one first element beyond a first set of elements depending to a position of a second element of a second set of elements.

The first and second set of elements can belong to a same geometrical space

The selecting can notably comprise:

- determining, for each element of the first set, a subset of the second set, the determining taking account of positions of elements of the second set relatively to this element of the first set; and
- selecting the first element beyond elements of the first set for which the determined subset comprises the second element.

In the exemplary embodiment illustrated in figure 3, the microprocessor 31 can be adapted for color grading at least one source frame of a visual content according to at least one reference frame of a reference visual content frame.

In the exemplary embodiment illustrated in figure 3, the microprocessor 31 can be configured for:

- iteratively determining a constraint on at least one source element of a source color set, said source color set being representative of at least one color used in the source frame, and at least one reference element of at least one reference color set, said reference color set being representative of at least one color used in at least one of said at least one reference frame;
- determining a global color transform to be applied to said source frame, said global color transform being chosen by minimizing at least two of said determined constraints.

In the exemplary embodiment illustrated in figure 3, the microprocessor 31 can be adapted for:

- selecting automatically at least one candidate element of a reference color set of elements of a color space representative of at least one color used in the reference frame, the selecting depending on a position of a first source element of a source color set of elements of the color space representative of at least one color used in the source frame, the selecting comprising:

  • determining, for each element of the reference color set, a subset of the source color set, the determining taking account of positions of elements of the source color set relatively of each element of the reference color set; and
  • selecting the candidate element beyond elements of the reference color set for which the determined subset comprises the first source element;

- using one of the candidate element for color grading the source frame.

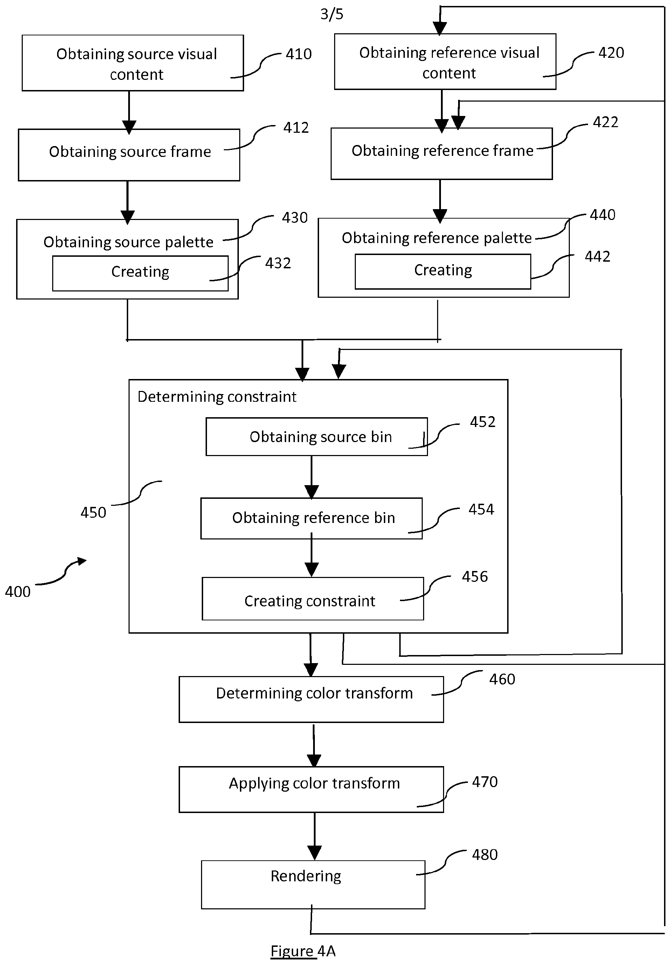

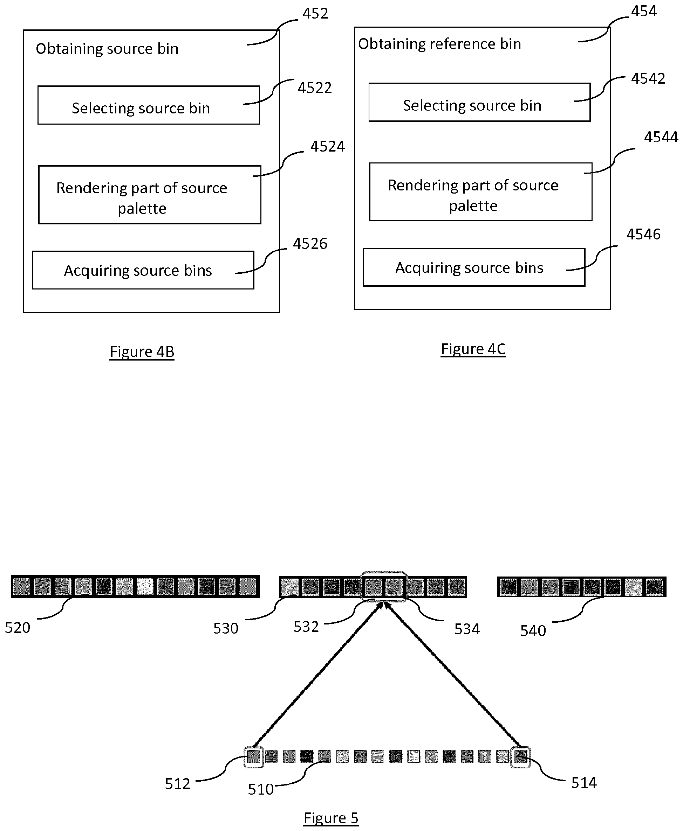

Figures 4A, 4B and 4C illustrate a flowchart of an exemplary method 400 of color grading, or remastering, of a source frame of an input digital visual content according to the present principles. The method can be implemented for instance in the electronic device 30 of figure 3.

In the illustrated embodiment, the method 400 comprises an obtaining 410 of at least one input visual content and an obtaining 420 of at least one reference visual content, to be used as an exemplar, or reference, for the color grading process of at least a part of the input visual content. Depending upon embodiments, the input and/or reference visual content may have been previously acquired, either locally (for instance by some image and/or video acquiring means, like a camera or a web cam, of the electronic device illustrated by figure 3), or remotely. Thus, in some embodiments, the obtaining 410 of the at least one input visual content and/or the obtaining 420 of the at least one reference visual content can comprise reading of local storage medium, like a memory of the electronic device 30 in which the method is implemented or a removable storage unit (like a USB key, a compact disk, and so on). In other embodiments, the at least one input visual content and/or the at least one reference visual content can be obtained via a communication interface of the electronic device 30 from a remote device.

In some embodiments, like in the illustrated embodiment, the obtaining 410 of the at least one input visual content and/or the obtaining 420 of the at least one reference visual content can be performed by interacting with a user, the selection of the source and/or reference content being acquired from a user interface (like a touchscreen, a mouse, a keyboard...). For instance, they can comprise acquiring a name, a version, a format and/or a location of a source and/or reference content to be obtained.

According to some embodiments, notably when a source and/or reference visual content is a video sequence, thus comprising several frames, the method can also comprise obtaining 412 a source frame from the obtained input visual content and/or obtaining 422 a reference frame from the obtained reference visual content. This can be performed similarly to the obtaining of a visual content, by interacting with a user or at least partially, automatically.

In some other embodiments, the selection of at least some of the source and/or reference visual contents and/or frames can be performed automatically, with or without requesting confirmation from a user (for instance by reading information from a descriptive file).

In some embodiments, the obtaining of a visual content and the obtaining of a frame from the visual content can be mixed. Indeed, when the visual content only comprises a unique image, as it is the case for instance when the visual is a still image, the obtaining of the visual content also implies the obtaining of the source frame itself.

Of course, the exemplary embodiments described herein are only presented as exemplary use cases and the principles of the present disclosure can also apply to many different use cases. For instance, they can apply to a color grading of source frames (for instance a still image or a frame of a video sequence) according to only one reference frame, or according to several reference frames of a same visual content, or according to several reference frames of different visual contents of a same type (for instance still images or video sequence) or of different types (for instance a mix of still images and video sequences). Notably, in some embodiments, when a source frame is to be color graded according to several reference frames, the obtaining of a reference visual content and/or a reference frame can be performed iteratively.

According to figure 4A, the method can also comprise obtaining 430 a color palette of the source frame and obtaining 440 a color palette of the reference frame.

A color palette of an image is a set of colors, or color set, being a subset of a set of all possible colors, that are representative of the color distribution in this image. Figure 2 illustrates an image 200 and a graphical view of its color palette 210. The elements (or bins) of the color palette (or color set) are colors, each represented 212 by a colored square.

Even if a color palette (constituted of a plurality of color bins) can be illustrated by a graphical representation (like a set of colored squares as illustrated in figure 2), it is to be pointed out that in the present patent application the terms "color bin" and "color palette" are not to be limited to graphical representations.

Indeed, the term "color bin" is herein to be understood as a point, or element, of a color space (for instance a Red Blue Green (RBG) color space, or a color space relating to Luminance and to Chrominance components A and B (also known as CIE L*A*B or CIELAB color space) of the French commission "Commission Internationale de l'Eclairage" (CIE).

Similarly, the term "color palette" is herein to be understood as a set of points of a color space. Points of a color palette are also called hereinafter "palette element".

In some embodiments, obtaining 430 a color palette of the source frame and/or obtaining 440 a color palette of the reference frame can involve creating 432, 442 a color palette for the frame (the source frame and the reference frame respectively).

Depending upon embodiments, several techniques can be used to create a color palette. A color palette can notably be computed in the L*a*b domain. It can also be computed in other color domains such as the domain known as "YCrCb" for instance.

For instance, in some embodiments, a K-means technique can be used. Such a technique can permit to find K clusters, in a color space, for an image. The K centroids represent the K more relevant points, or color bins, for the image. All the color bins corresponding to the K centroids represent the color palette of the image (thus a color bin represents at least one color of the image). In some embodiment, for instance, a k-means technique with a predefined number $k > 0$ of clusters can be used. In other embodiments, other techniques, for instance a technique that finds automatically the number K, for instance an Automatic Color Palette (ACoPa) technique, like the technique considered in "Optimal Transportation for Example-Guided Color Transfer", Frigo et al. (2014), can be used.

Of course, in still other embodiments, other technics can be used.

In the exemplary embodiment described, let $\boldsymbol{x} \in R^{n \times 3}$ be a vector containing the color pixels in the image. A color palette $\boldsymbol{q} \in R^{k \times 3}$ of size $k$ representative of the color distribution in $\boldsymbol{x}$ can be obtained by clustering the row-vectors in $\boldsymbol{x}$ into $k$ clusters. Such a clustering can use a k-means technique for instance.

When L reference frames are used for color grading a source frame, applying the clustering procedure detailed above to the L reference frames (or exemplary frames) yields to L palettes $\boldsymbol{q}^1 \in R^{k_1 \times 3}, ..., \boldsymbol{q}^L \in R^{k_L \times 3}$, where the number of clusters $k_1, ..., k_L \geq 0$ can be chosen differently for each frame. To simplify notations hereafter, these palettes can be concatenated in a global reference palette denoted by

$$\boldsymbol{q} = \begin{pmatrix} \boldsymbol{q}^1 \\ \vdots \\ \boldsymbol{q}^L \end{pmatrix} \in \mathbb{R}^{K_e \times 3},$$

where $K_e = \sum_{i=1}^{L} k_i$.

In some embodiments, like in the exemplary embodiment described, all the bins of all the L color palettes are present in the global reference palette (a given color bin can thus be present several times in the global reference palette).

In other embodiments, the L color palettes of the different reference images can be merged together in the global palette, in order for the global palette to contain only distinct color bins.

A global source palette can be obtained similarly from the source frames. For instance, for a unique source image, the source palette $\mathbf{p} \in R^{K_S \times 3}$, with $K_s \geq 0$, can be obtained from the source image using a similar clustering procedure. It is to be noted that the source palette and the reference palette can have a different number of color bins, or a same number of color bins.

Figure 5 represents an example of a source palette 510 and of several reference palettes 520, 530 and 540.

In some embodiments, creating 432 a color palette for a source frame and/or creating 442 a color palette for a reference frame can be optional. Indeed, such a color palette can also have been previously created and can be obtained by reading a storage medium and/or from a communication interface of the electronic device. In such a case, the color palette can notably be stored in association with the corresponding frame (for instance as metadata).

It is to be noted that, depending upon embodiments, the obtaining of a source visual content, of a source frame and its associated color palette and the obtaining of a reference visual content, of a reference frame and its associated color palette can be performed in parallel or sequentially in variable orders.

In the detailed embodiment, the method can comprise determining 450 at least one color mapping constraint. Figure 5 represents an example of a color mapping constraint between some sources bins 512, 514 of the source palette 510 and some reference bins 532, 534 of the reference palette 530.

As illustrated by figures 4A, 4B, 4C and 5, determining 450 a constraint can involve obtaining 452 at least one source color bin 512, 514 (of the source color palette 510) on which the constraint is to be applied and obtaining 454 at least one reference color bin 532, 534 (of at least one 530 of the reference color palettes 520, 530, 540) to be used as a goal of color grading of at least one of the source bin.

In the embodiment of figure 4B, the obtaining 452 of a source bin can comprise a rendering 4524 of information (like color squares) representative of at least a part of the source palette of the source image on a user interface of the electronic device and an acquiring 4526 of the at least one information representative of the at least one source bin, from an input element of the user interface (like an activable zone of a window displayed on a screen of the electronic device). For instance, in some embodiments, a user can select, thanks to a mouse notably, some color squares representative of bins (like shades of a color -- or multiple colors --) of the source color palette (denoted hereinafter $\mathbf{p}$) of the source frame to be modified.

We denote hereinafter by $j_1, ..., j_m$ the indices of the selected palette elements in the source palette $\mathbf{p}$. The selected palette elements are thus $\mathbf{p}_{j_1}, ..., \mathbf{p}_{j_m} \in R^3$, where $\mathbf{p}_j$ denotes the $j^{th}$ row-vector (or the three dimensions of the color bin $p_j$) of $\mathbf{p}$.

In some embodiments, information representative of all the color bins of a source palette can be rendered on the user interface. In other embodiments, information representative of some color bins of a source palette can be omitted. It can be the case for instance when a constraint has already been created on some color bins of the source palette. In such a case, information representative of the colors bins already involved in a constraint can be omitted and rendered differently than those relating to color bins not involved in a constraint.

The method can thus comprise, before or during the rendering, selecting 4522 which color bins of the source palette are to be rendered or omitted (or rendered in an altered way) of the user interface. Such an embodiment can permit to avoid creating two constraints on a same source bin (which can lead to an impossibility to define a global transform on the source image that respect strictly both constraints).

In other embodiments, when information representative of a source bin already involved in a constraint is selected by a user, a request for confirmation (leading to the suppression for instance of the previously created constraint) can be output on the user interface of the electronic device.

In some embodiments, for instance because a previous color grading has already been performed on the source frame, using some reference images, at least some of the source bins can be selected automatically, for instance by accessing a descriptive file associated (for instance as metadata) to this previous grading.

Depending upon embodiments, the obtaining 454 of at least one reference bin of the at least one reference palette, to be used as target colors for the color grading of the obtained source bins, can be performed similarly to the obtaining of the source bins detailed above or differently. For instance, as illustrated by figure 4C, the obtaining 454 of a reference bin can comprise a rendering 4544 of at least a part of at least one of the reference palette of at least one reference image on a user interface of the electronic device and an acquiring 4546 of information representative of the at least one reference bin, from an input element of the user interface. In some embodiments, a global reference palette, concatenating reference palette of each reference frame can be rendered, at least partially, on a user interface. Thus, in such embodiments, a user can select bins of a global reference color palette (denoted hereinafter $\mathbf{q}$) of the at least one reference frame.

We denote by $i_1, ..., i_l$ (with $l$ inferior or equal to $Ke$) the indices of the selected palette elements in the global reference palette $\mathbf{q}$. The selected palette elements (or bins) are thus $q_{i_1}, ..., \mathbf{q}_{i_l} \in R^3$.

In some embodiments, before or during a rendering of a part of a reference palette, an automatic pre-selection can be applied on the reference palette (for instance the global reference palette **q**) to limit the possible choices (by a user for instance) of target colors. Such an embodiment can for instance help to avoid choices that would lead to too much color inconsistencies after color modification. Such an embodiment can also permit to follow a general color policy (for instance general recommendation of a photography director or parameters stored in a user profile) that restricts the target colors to be used. For instance, some colors and/or shade of colors can be forbidden in order to keep a uniformity in colors of a whole movie or in different episodes of a same series. The method can thus comprise selecting 4542 the reference bins (also called herein "candidate reference bins" or more simply "candidate bins") that a user will be able to choose for creating the constraints. In such an embodiment, the rendering 4544 of the reference palette can take into account this selecting 4542. For instance, only the candidate reference bins can be rendered (the reference bins other than the candidate bins being omitted), or the reference bins other than the candidate bins can be rendered in an altered way of the user interface. In some embodiments, a reference bin other than the candidate bins can be not selectable by means of the user interface. In other embodiments, a selection, by means of the user interface, of a reference bin other than the candidate bins can lead to a request for confirmation (asking for instance for an input of a security code or password) being output on the user interface of the electronic device.

In some embodiments, for instance because a previous color grading has already been performed on the source frame, using some reference images, at least some of the reference bins can be selected automatically, for instance by accessing a descriptive file associated (for instance as metadata) to this previous grading.

Once the source bins and the reference bins involved in the determining of the constraint has been obtained, the constraint can be mathematically summarized by creating the set of pairs of bin indexes

$$\Omega_1 = \left\{ (i_u, j_v) : u = 1, \ldots, l, \ v = 1, \ldots m \right\}.$$

Each pair comprises an index of a bin of the source palette p and an index of a bin of the reference palette q, a bin of the source palette coming from at least one source image and a bin of the reference palette coming from at least one reference image. Indeed, the source color bins $\boldsymbol{p}_{j_1}, ..., \boldsymbol{p}_{j_m}$ (with m inferior or equal to $Ks$) should map to a combination of the targeted color bins $\boldsymbol{q}_{i_1}, ..., \boldsymbol{q}_{i_l}$.

In the illustrated embodiment, the determining of a constraint can be iteratively performed, leading to new different constraints/sets $\Omega_2$, $\Omega_3$, *etc.*

Depending on embodiments, the sets of source bins involved in the different determined constraints can be disjoint or can have some bins in common.

In some embodiments, at least some of the currently determined constraints can be presented (as lists of pairs of mapped colors for instance) on a user interface of the device. In some embodiments, it can be possible, from a user interface, to discard at least one of the already determined constraints. This can be implemented for instance, in embodiments where a rendered constraint is selectable by a user, thanks to a "delete "button.

In other embodiments, it can be implemented automatically. For instance, in some embodiments, when a new constraint is set that conflicts with a previously determined constraint, the previously determined constraint can be deleted automatically. In the exemplary embodiment illustrated, the method comprises determining 460 a global transform to be applied to the source image, the global color transform being chosen by minimizing at least two of the determined constraints. In other words, the global transform is chosen as to minimize the transport cost or distances between the source bins and the corresponding reference bins of the at least two constraints.

In some exemplary embodiments, all the constraints that have currently been determined (and not deleted) can be taken into account for the minimization.

The mapping between the source colors and their corresponding reference colors according to one of the constraints can obtained by solving an optimal transport problem (OT), in order to find the best combination of reference bins for every source bin. Document "Regularized Discrete Optimal Transport" (HAL Id: hal-00797078; 5 March 2013)) of Ferradans et al., or document "Wasserstein Barycentric Coordinates: Histogram Regression Using Optimal Transport" (HAL Id: hal-01303148, 20 April 2016) from Bonneel et al., have depicted some ways of solving an OT.

In the illustrated embodiment, the optimal transport problem involves a cost matrix C, $C \in R^{K_e \times K_s}$ that represents the cost of "transporting" each color in the source palette to each color in the reference palette. In some embodiments, each element (or entry) $C_{ij}$ of this matrix satisfies

$$C_{ij} = \left\| q_i - p_j \right\|_2 ,$$

but other choices are possible.

Let's note "**1**" the row vector with all entries equals to 1, "1Γ" the multiplication of the vector "**1**" with a matrix

"$\Gamma$" , "$\Gamma 1^T$" the multiplication of the vector "$1^T$" with the matrix "$\Gamma$" where "$1^T$" is the transpose of the vector "$\mathbf{1}$".

With those notations, a version of the optimal transport problem reads

$$\min_{\Gamma \in \mathbb{R}^{K_e \times K_s}} \langle \mathsf{C}, \Gamma \rangle_{\mathbf{F}} \quad \text{s.t.} \quad \begin{cases} 0 \leqslant 1\Gamma \leqslant K_s^{-1}, & 1\Gamma 1^T = \alpha, \\ 0 \leqslant \Gamma 1^T \leqslant K_e^{-1}, & \Gamma \geqslant 0, \end{cases}$$

where s.t. means "subject to" and

$$\langle \mathsf{C}, \Gamma \rangle_{\mathbf{F}} = \sum_{i=1}^{K_e} \sum_{j=1}^{K_s} \mathsf{C}_{ij} \Gamma_{ij}$$

is the cost of the transport, that we want to minimize.

In the Optimal transportation perspective, $\Gamma$ represents the transport flow between the source and reference image and thus the amount of color transported between the bins of both palettes

The inequalities on the right-hand side apply element-wise. The constraints $0 \leq 1\Gamma$ and $0 \leq \Gamma 1^T \leq K_e^{-1}$ apply elementwise and bound the minimum and maximum amount of color to be transported from each source bin to all the reference bins, and from each reference bin to all the source bins (that is to say the amount of color for each row and for each column of the matrix $\Gamma$).

The constraint $1\Gamma 1^T = \alpha$, with $\alpha \in [0,1]$, constrains the total amount of color that is transported. This problem is, for example, used in to transfer color between two images in the document "Optimal Transportation for Example-Guided Color Transfer" (2014) of Frigo et al. with $\alpha = 1$.

The above problem can be modified to take into account the determined constraints. For instance, each time a new constraint is added (for instance specified by the user), we compute the set

$$\Omega = \cup_{a=1}^{A} \Omega_a$$

where $A \geq 0$ is the number of constraints set so far and we solve

$$\min_{\Gamma \in \mathbb{R}^{K_e \times K_s}} \langle \mathsf{C}, \Gamma \rangle_{\mathbf{F}} + i_{\Omega}(\Gamma) \quad \text{s.t.} \quad \begin{cases} 0 \leqslant 1\Gamma \leqslant K_s^{-1}, & 1\Gamma 1^T = \alpha, \\ 0 \leqslant \Gamma 1^T \leqslant K_e^{-1}, & \Gamma \geqslant 0, \end{cases}$$

where

$$i_{\Omega}(\Gamma) = \begin{cases} 0 & \text{if supp}(\Gamma) \subseteq \Omega \\ +\infty & \text{oth.} \end{cases}$$

is an indicator function that constrains the support of $\Gamma$:

$$\text{supp}(\Gamma) = \{(i,j) | \Gamma_{ij} > 0\}.$$

The parameter $\alpha$ can be adapted with the constraints $\Omega$. For example, in some embodiments, with the set of constraints $\Omega_1$ defined above, it can take the value $\alpha = \min\left(\frac{m}{K_s}, \frac{l}{K_e}\right)$.

This indicator function forces the matrix $\Gamma$ to contain zeros outside the set $\Omega$, i.e., the colors are transported only between palette elements (or in other words the bins of the source and reference palettes) concerned by a constraint (for instance the palette elements selected by the user), hence enforcing the desired constraints to be respected.

In particular, when the sets of constraints are disjoint,

$$\cap_{a=1}^{A} \ \bar{\Omega_a} = \emptyset,$$

then the solution exactly respects the set of constraints imposed by the user.

In some embodiments, when the sets are not disjoint, the above minimization problem results to a trade-off between the desired constraints and the transport cost.

Finally, we compute a new palette $\boldsymbol{p}^* \in R^{K_s \times 3}$ resulting of the transfer between the source bins and the reference bins. The rows $p_j^*$ of p* read

$$\boldsymbol{p}_j^* = \frac{\sum_{i=1}^{K_e} \Gamma_{ij}^* \boldsymbol{q}_i}{\sum_{i=1}^{K_e} \Gamma_{ij}^*},$$

where $\Gamma^*$ is a solution of the constrained optimal transport problem, for all $j$ such that

$$\sum_{i=1}^{K_e} \Gamma_{ij}^* > 0$$

and

$$\boldsymbol{p}_j^* = \boldsymbol{p}_j$$

for all $j$ such that $\sum_{i=1}^{K_e} \Gamma_{ij}^* = 0$ , i.e., the source color bin that are not part of the constraints are not modified.

One the mapping between the original palette elements in $p$ and the new ones in $\boldsymbol{p}^*$ has been computing by solving the optimal transport problem (OT), a color LUT encoding this mapping can be obtained from that mapping. For instance, a portable LUT encoding the global color transformation can be built (or in other words determined) by using a spline interpolation method applied on the correspondences computed with the OT.

The color LUT can then be converted to other formats. In some embodiments, notably, it can be converted to at least one format compatible with existing tools, such as Lustre © or Resolve © tools.

According to the illustrated embodiment, the method can also comprise applying 470 the determined global transform on the source image and rendering 480 the color-transformed image on the user interface of the device. As illustrated by figure 4A, in some embodiments, the applying 470 and the rendering 480 can be performed for each new determined constraint. Such an embodiment can offer a user an opportunity of evaluating a result of a newly determined constraint.

The applying 470 and rendering 480 can notably be performed automatically, upon an obtaining 454 of at least one reference bin for a given source bin (or for source bins) and the creation 456 of the corresponding constraint. Such an embodiment can offer advantages in terms of simplicity for a user.

In other embodiments, the applying 470 and rendering 480 can be performed only on request of a user. For instance, a specific button (like "apply") can be provided of a user interface of the device. Such an embodiment can offer some advantage in term of speed, when the quality of the color transform is only assessed from time to time (for instance after determining several constraints).

Depending upon embodiments, rendering 480 a transformed image can comprise displaying the transformed image on a display on the device where the color grading method is performed, or printing the transformed image, and/or storing the transformed image on a specific support. This rendering is optional.

A skilled artisan will appreciate that other functionalities not described in the present disclosure may be added to the color grading method in order to improve the quality of the end product.

The present disclosure has been detailed with a 3D LUT color transforms. Of course, the solution of the present disclosure can also be used in link with a 1 D LUT (for instance a contrast mapping for luminance transfer), or a combination of at least two of above transformations.

A first aspect of the present disclosure, as presented above, deals with an iterative way of defining constraints for a color transfer processing. It is to be noted that the disclosure also encompasses a second aspect. Depending upon embodiments, this second aspect can be implemented independently of the first aspect, or combined with the first aspect as illustrated by figure 4C. Indeed, figure 4C illustrates the selection of reference bins to be used for constructing pairs of source bin and reference bin for creating a color transformation.

The second aspect of the present disclosure deals more generally with the selection of at least one element in a set of candidate elements, each candidate element being associated for instance with a point of a geometric space, and can be applied in many technical fields, even if detailed below in the technical field of color processing.

More precisely, according to some embodiments, the selecting is performed according to at least one point of the geometrical space. The selecting can notably take into account a distance between a candidate point and this at least one point.

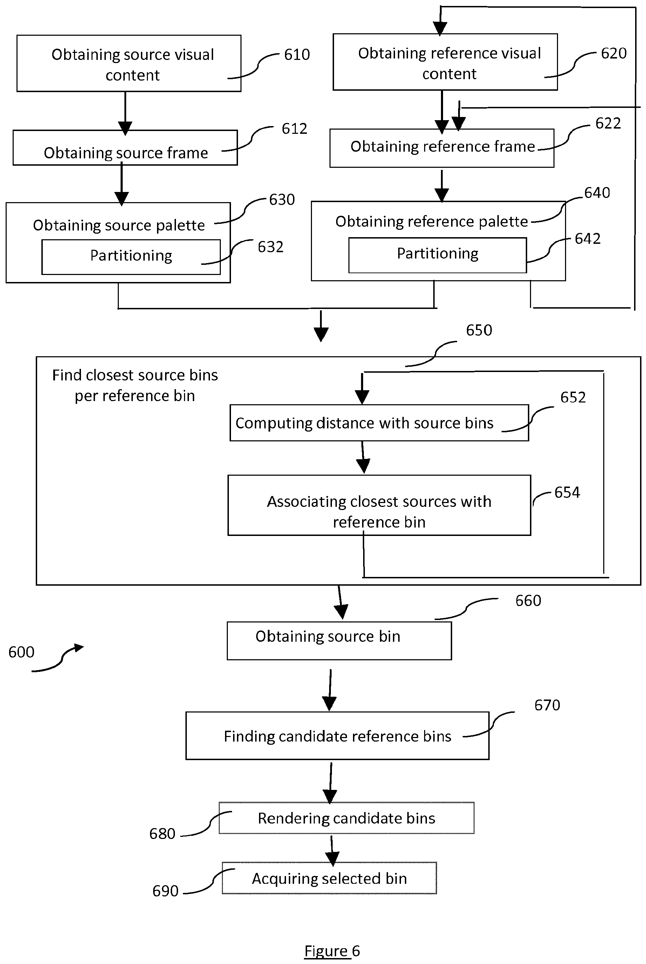

The second aspect of the present disclosure is depicted below in link with figure 6 in a exemplary embodiment that belongs to the technical field of color processing and is applied to a selection of reference color bins of a reference color palette to be used for constructing pairs of source bin and reference bin for creating a color transformation. The bins of the reference palette can be selected according to their location, in a color space (like the RGB color space), regarding the location of a source bin (the at least one point). Distances between color bins can for instance be computed in a perceptual color space. For instance, in the CIE L*A*B color space, they can be computed as Euclidean distances in a n-dimensional space (as explained above for distances in link with the first aspect).

There are many ways of selecting a reference bin to be associated with at least one source bin in a color transformation. For instance, the reference bins to be mapped with given source bins can be obtained "manually", by a user selection. Freely choosing the reference bins can permit a user to define a limited number of reference bins, compared to the reference bins of the whole reference palette. It can also permit to select reference bins that correspond to its expectation in terms of transferred color look (like the fulfilling of an artistic criteria).

However, when the mapping defined by the user is used for defining a color transformation, automatically generated and encoded in a LUT, the resulting color transformation is sometimes not exactly in line with the user expectation. Indeed, some mapping between source bins and reference bins can lead to a resulting LUT containing strong discontinuities, that will induce strong artefacts in the graded image. Such discontinuity can appear notably if two close colors of the source palette are mapped onto two far colors of the reference palette. One cannot even guaranty the ability to create a LUT based on a user defined mapping. For instance, reference bins being too far from the corresponding source bins can lead to a LUT with holes in and thus to an impossible mapping.

Such a situation may occur when a unique constraint is used for defining a color transformation. It may also occur when several constraints are combined for building a single-color transformation, each constraint mapping a subset of bins of the source palette and a subset of bins of the reference palette (as presented above in link with the first aspect). Of course, the color transfer is more complex, and thus the artifacts are more important, when several set of constraints are to be respected.

A solution, for obtaining a correct LUT, can include creating a constraint, relating to a color transfer of some given source bins of a source image, including all reference bins of the reference palette. The use of an automatic processing (like an OT algorithm), on the constraint, for minimizing the transport costs between pairs of one of the given source bins and one of the reference bins can then permit to find automatically the reference bins providing the best mapping for satisfying a mathematical criterion defined by a cost function. However, when the assessment of the mapping pairs is performed automatically, it does not take into account a feeling of a user, like an artistic criterion. Thus, the image resulting from the applying of the LUT can be different of what is expected by a user.

So, there is a need for a solution that helps generating color transformations leading to a LUT smoother and with less artefact than some solutions of the prior art while taking into account, at least partially, the willingness of the user.

At least some embodiments of the second aspect of the disclosure relate to the addressing of this need. More precisely, at least some embodiments of the present disclosure propose preselecting automatically only bins (or points) being close enough (or the more relative) regarding a corresponding source bin for making it possible to generate a correct mapping/LUT before obtaining reference bins of a constraint, amongst the pre-selected reference bins, by an interaction with a user.

Figure 6 illustrates an exemplary embodiment of the method for obtaining reference bins of a color constraint implementing this second aspect. In the exemplary embodiment, the method is used for color grading, or remastering, of a source frame of an input digital visual content according to the present principles. The method can be implemented for instance in the electronic device 30 of figure 3.

According to the illustrated embodiment, the method 600 comprises obtaining 630 a source palette and obtaining 640 a reference (or exemplary) palette. This obtaining can be performed similarly to the obtaining 430 of a source palette and obtaining 440 of a reference palette detailed in link with figure 4. Notably, the method also can comprise, prior to the obtaining 630, 640 of the source and reference palette, obtaining 610 a source visual content and obtaining 620 at least one reference visual content and/or obtaining 612 a source frame and obtaining 622 at least one reference frame, similarly to what have been described in link with steps 410, 420, 412, 422 of figure 4. The source palette and the reference palette can then be obtained from the source and the at least one reference frame respectively. In the embodiment of figure 6, the method can comprise obtaining 660 at least one source bin of the source palette on which a color transform is to be created. This obtaining can be performed similarly to the obtaining 452 of a source bin detailed in link with figure 4. Notably, the at least one source bin can be acquired from a user interface or automatically.

As illustrated in figure 6, the method can comprise finding 670 the candidate bins that are selectable for a mapping with the at least one obtained source bins. More precisely, finding the candidate bins consists in restricting the reference bins of the reference palette that will be allowed to be selected in a further selection stage, for grading the obtained source bins $p_{is}$, in order to help obtaining a smooth final 3D LUT to a subset of reference bins (also called candidate or "preselected" reference bins) $q_{k1}, ..., q_{km}, 1 \le k_1, ..., k_m \le K_e$.

Depending upon embodiments, the way the reference bins (like the more relevant ones) can be selected can vary. Notably, in some embodiments, the candidate bins can be for instance the more relevant bins (for the color transfer) according to their distance relatively to the obtained source bin(s). A distance between a source bin $p_j$ and a reference bin $q_i$ can be evaluated for instance as value of element $c_{ij}$ of a cost matrix, with $C_{ij} = \|q_i - p_j\|_2$, as already explained in link with the first aspect for instance.

According to the exemplary embodiment illustrated, the method can comprise, prior to the obtaining 660 of a source bin, finding 650 the at least one source bins of the obtained source palette for which each reference bin of the reference palette is relevant. The relevance of a reference bin regarding a source bin can be based for instance on distances between this reference bin and this source bin. In such an embodiment, the method can comprise computing 652 the distance between each source bin $p_i$ and each reference bin $q_j$ (for instance as explained above by computing $c_{ij} = \|q_j - p_i\|_2$) and associating 654 at least one source bin to this reference bin according to the computed distance. In some embodiments, the $n$ closest source bins (with $n$ being an integer with value strictly more than 0), can be associated to a reference bin. For instance, the closest source bin, the 5 closest source bins, the 10 closest source bins, can be associated to a reference bin.

In an exemplary embodiment, where only the closest source bin is to be associated with each reference bin $q_j$, all distances $c_{ij}$ $1 \le i \le K_s$ for this reference bin $q_j$ are sorted from the smallest to the largest. The most relevant source bin $p_{i_{rj}}$ for this reference bin $q_j$ is the source bin $p_i$, $i = i_{rj}$, with the smallest distance to $q_j$.

$$i_{rj} = argmin_i(c_{ij})$$

In other embodiments, all the source bins having a distance with the reference bin being less than a first value (or threshold value) can be associated to a reference bin.

In such an embodiment, the method can comprise associating, to a reference bin, the source bins being the "closest" neighbors of the reference bin with a distance being less than a threshold value $th$. For instance, the method can comprise associating the reference bin $q_j$, with the source bins having indices in

$$I_{rj} = \{i \mid d_{ij} < th \}$$

Such an embodiment can lead to an association of 0,1 or several source bins to a reference bin.

In the embodiment of figure 6, after the obtaining 660 of the at least one source bin of the source palette on which a color transform is to be created, the method can comprise finding candidate reference bins for this obtained source bin $p_{is}$.

The candidate reference bins can be selected, from the reference bins, according to the source bin(s) they are associated with (steps 650 and 654). If a bin source $p_{i_{rj}}$ associated with the reference bin $q_j$ is among the obtained bin sources $p_{is}$, the reference bin $q_j$ is selected as a candidate reference bin for the mapping.

In the embodiment illustrated by figure 6, the finding 650 can notably be performed before the obtaining 660 of the source bin. Such an embodiment can permit to decrease the time needed for choosing the relevant reference bins once a source bin has been obtained (and thus to decrease the "apparent" processing time, at a user point of view, after the selection of a source bin).

In other embodiments, the distance between a source bin and a reference bin can be computed after the obtaining of a source bin. Such an embodiment can permit to limit unnecessary processing (like processing of distance relatively to a source bin that will not be selected in the future).

In the illustrated embodiment of figure 6, the method can comprise rendering 670 at least one found candidate (or pre-selected) bin. In some embodiments, only candidate bins can be rendered. In other embodiments, reference bins other than the candidate bins can be rendered (for instance in an altered or different way permitting to make the distinguish with the candidate bins).

In some embodiments, all pre-selected bins can be rendered. In other embodiments, including for instance some additional restriction rules forbidding a selection of some reference bins, only a part of the candidate bins can be rendered.

In the illustrated embodiment of figure 6, the method can also comprise acquiring 690 an information representative of some reference bins (to be used for a color transfer to be applied to the source bins for instance). Those reference bins can be selected, by means of a user interface for instance, amongst the candidate bins rendered on a user interface.

Of course, the rendering 670 and acquiring 680 can be optional depending upon embodiments.

The method illustrated by figure 6 can notably be performed iteratively on several reference palettes (of different reference frames for instance).

In the exemplary embodiment described, the source bins associated with a reference bin can be the source bins of the source palette having a distance with the reference bin, being less than a first "threshold" value.

In some embodiments, the first value can be a constant value, defined statically in a program file for instance. In other embodiments, the first value can be obtained by reading a configuration file or through a user interface. Notably, in some embodiments, the first value can be varied dynamically.

Indeed, it may happen in some implementation that an intersection between the sets of source bins associated to at least one of the reference bins of the reference palette $p_{i_{rj}}$ and the set of selected $p_{is}$ is empty. Hence, in such a case, no candidate reference bin can be found (or can be automatically preselected). Embodiments where the first value can be varied dynamically can permit to guaranty that some candidate reference bins can be found.

For instance, the user interface can comprise means for varying a threshold value, that permits to compute the first value. It can also comprise means for rendering information representative of the current value of the threshold. The means for varying the threshold value and the means for rendering the information representative of the threshold current value can be implemented differently upon embodiments. Notably, they can be implemented as a user-variable cursor, that can be varied from a minimum value and a maximum value. For instance, zero or one source bin can be associated to a reference bin when the cursor is positioned to the minimum value. When the cursor is moved toward (respectively from) the maximum value, the number of source bins associated to a reference bin increased (respectively decreased). Notably, several source bins can be associated to a reference bin. When the number of sources bins associated with a reference bin increased (respectively decreased), a source bin is more likely (respectively less likely) to be associated with an increasing (respectively decreasing) number of reference bins, thus the number of candidate reference bins also increases (respectively decreases). Consequently, the number of candidate reference bins can be varied by a user by moving the cursor.

In such an embodiment, the rendering of candidate bins can be performed iteratively upon variation of the cursor. Such an embodiment can permit a user to vary easily the number of candidate bins rendered, and thus to locate the cursor on a value that corresponds to his need (or his artistic feeling) in terms of candidate bins, in view of an upcoming selection. Of course, instead of a cursor, other ways of defining the threshold value can be offered on a user interface: for instance, a list of activable predefined numeric values, or a slider.

As can be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium may be utilized.

A computer readable storage medium can take the form of a computer readable program product embodied in one or more computer readable medium and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether such computer or processor is explicitly shown.

**Claims**

1. A method comprising:

   - iteratively determining a constraint on at least one source element of a source color set, said source color set being representative of at least one color used in at least one source frame, and at least one reference element of at least one reference color set, said reference color set being representative of at least one color used in at least one reference frame;
   - determining a global color transform to be applied to said source frame, said global color transform being chosen by minimizing at least two of said determined constraints.

2. The method according to claim 1 wherein said at least two determined constraints relate to at least two distinct source elements.

3. The method of claim 1 or 2 wherein said determining of a global color transform is performed iteratively and wherein said method comprises color grading said source frame by applying said iteratively determined global transforms, each of said color grading resulting in a color-graded frame, and rendering said color-graded frames.

4. The method of any of claims 1 to 3 comprising:

   • selecting automatically at least one candidate element of said reference color set according to said at least one source element of said source color set.;
   • obtaining said reference element from said at least one candidate element.

5. The method of claim 3 or 4, where said selecting of said candidate element comprises:

   • determining, for each element of said reference color set, a subset of said source color set, said determining taking account of positions, in a color space, of elements of said source color set relatively to said each element of said reference color set; and
   • selecting said candidate element beyond elements of said reference color set for which the determined subset comprises said source element.

6. The method of claim 4 or 5, wherein said method comprises:

   • rendering said at least one selected candidate element on a user interface of said electronic device;
   • obtaining said reference element, beyond said at least one selected candidate elements, from said user interface.

7. An electronic device comprising at least one processor configured for:

   - iteratively determining a constraint on at least one source element of a source color set, said source color set being representative of at least one color used in at least one source frame, and at least one reference element of at least one reference color set, said reference color set being representative of at least one color used in at least one reference frame;
   - determining a global color transform to be applied to said source frame, said global color transform being chosen by minimizing at least two of said determined constraints.

8. The electronic device of claim 7 wherein said processor is adapted for:

   • rendering said source color set on a user interface of said electronic device;
   • obtaining said source element from said user interface.

9. The electronic device of claim 7 or 8 wherein said processor is adapted for:

   • rendering said reference color set on a user interface of said electronic device;

• obtaining said reference element from said user interface.

10. The electronic device of any of claims 7 to 9 wherein said processor is adapted for:

• selecting automatically at least one candidate element of said reference color set according to said at least one source element of said source color set;
• obtaining said reference element amongst said at least one candidate element.

11. The electronic device of claim 10 wherein said processor is adapted for:

rendering said candidate element on a user interface of said electronic device.

12. The electronic device of claim 11 wherein said selecting of said candidate reference element takes into account a numeric value acquired from said user interface.

13. The electronic device of claim 11 or 12 wherein said numeric value is computed from a position of a variable cursor rendered of said user interface.

14. A computer program product comprising program code instructions for executing, when said program is executed by a computer, a method comprising:

- iteratively determining a constraint on at least one source element of a source color set, said source color set being representative of at least one color used in at least one source frame, and at least one reference element of at least one reference color set, said reference color set being representative of at least one color used in at least one reference frame;
- determining a global color transform to be applied to said source frame, said global color transform being chosen by minimizing at least two of said determined constraints.

15. A computer-readable storage medium on which is saved a computer program comprising program code instructions for executing, when said program is executed by a computer, a method comprising:

- iteratively determining a constraint on at least one source element of a source color set, said source color set being representative of at least one color used in at least one source frame, and at least one reference element of at least one reference color set, said reference color set being representative of at least one color used in at least one reference frame;
- determining a global color transform to be applied to said source frame, said global color transform being chosen by minimizing at least two of said determined constraints.

110    120    130

Figure 1

200

210    212

Figure 2

31 CPU

310 GPU

32 Graphics card

320

Display
33

34 I/O

300

30

35 ROM

37

38

RAM 36

Prog 360

Power supply 39

Figure 3

```
┌─────────────────────────┐            ┌─────────────────────────┐
│ Obtaining source visual │ ⟋ 410      │ Obtaining reference     │ ⟋ 420
│ content                 │            │ visual content          │
└─────────────────────────┘            └─────────────────────────┘
            │                                      │
            ▼                                      ▼
┌─────────────────────────┐            ┌─────────────────────────┐
│ Obtaining source frame  │ ⟋ 412      │ Obtaining reference     │ ⟋ 422
│                         │            │ frame                   │
└─────────────────────────┘            └─────────────────────────┘
            │                                      │
            ▼                                      ▼
┌─────────────────────────┐ ⟋ 430      ┌─────────────────────────┐ ⟋ 440
│ Obtaining source palette│            │ Obtaining reference     │
│ ┌─────────────────────┐ │ ⟋ 432      │ palette                 │ ⟋ 442
│ │     Creating        │ │            │ ┌─────────────────────┐ │
│ └─────────────────────┘ │            │ │     Creating        │ │
└─────────────────────────┘            │ └─────────────────────┘ │
                                       └─────────────────────────┘
```

```
┌───────────────────────────────────────────────┐
│ Determining constraint                         │
│   ┌─────────────────────────────┐ ⟋ 452        │
│   │  Obtaining source bin       │              │
│   └─────────────────────────────┘              │
│                 │                              │
│                 ▼                              │
│   ┌─────────────────────────────┐ ⟋ 454        │
│   │  Obtaining reference bin     │              │
│   └─────────────────────────────┘              │
│   450           │                              │
│                 ▼                              │
│   ┌─────────────────────────────┐ ⟋ 456        │
│   │   Creating constraint       │              │
│   └─────────────────────────────┘              │
└───────────────────────────────────────────────┘
```

400

```
┌─────────────────────────────────────┐ ⟋ 460
│   Determining color transform       │
└─────────────────────────────────────┘
                 │
                 ▼
┌─────────────────────────────────────┐ ⟋ 470
│   Applying color transform          │
└─────────────────────────────────────┘
                 │
                 ▼
┌─────────────────────────────────────┐ ⟋ 480
│   Rendering                         │
└─────────────────────────────────────┘
```

Figure 4A

452

| Obtaining source bin |
| |
| Selecting source bin |
| |
| Rendering part of source palette |
| |
| Acquiring source bins |

4522

4524

4526

454

| Obtaining reference bin |
| |
| Selecting source bin |
| |
| Rendering part of source palette |
| |
| Acquiring source bins |

4542

4544

4546

Figure 4B

Figure 4C

520

530    532    534    540

512    510    514

Figure 5

Obtaining source visual content — 610

Obtaining reference visual content — 620

Obtaining source frame — 612

Obtaining reference frame — 622

Obtaining source palette — 630

Partitioning — 632

Obtaining reference palette — 640

Partitioning — 642

650

Find closest source bins per reference bin

Computing distance with source bins — 652

Associating closest sources with reference bin — 654

660

Obtaining source bin

600

670

Finding candidate reference bins

Rendering candidate bins

680

Acquiring selected bin

690

Figure 6

**Europäisches Patentamt**

**European Patent Office**

**Office européen des brevets**

# EUROPEAN SEARCH REPORT

Application Number

EP 17 30 5645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Frigo et al.: "Optimal Transportation for Example-Guided Color Transfer" In: Cremers et al. (Eds.): "ACCV 2014, LECTURE NOTES IN COMPUTER SCIENCE", 1 January 2015 (2015-01-01), SPRINGER INTERNATIONAL PUBLISHING, CHAM, XP047311820, ISSN: 0302-9743 ISBN: 978-3-642-27168-7 vol. 9005, pages 655-670, * abstract * * sections 3,3.2,3.3,4.4 * * figures 2,3,8 * | 1-15 | INV. G06T11/00 |
| X | US 2009/231355 A1 (PERRONNIN FLORENT [FR]) 17 September 2009 (2009-09-17) * abstract * * figure 3 * * paragraphs [0011], [0018], [0024], [0040] - [0043] * * claim 4 * | 1,7,14, 15 | |
| A | US 2012/075329 A1 (SKAFF SANDRA [FR] ET AL) 29 March 2012 (2012-03-29) * abstract; figure 2 * * paragraphs [0004], [0014], [0097] - [0113] * | 1-15 | TECHNICAL FIELDS SEARCHED (IPC) G06T G06K H04N G09G |
| A | H. SHEIKH FARIDUL ET AL: "Colour Mapping: A Review of Recent Methods, Extensions and Applications", COMPUTER GRAPHICS FORUM, vol. 35, no. 1, 29 July 2015 (2015-07-29), pages 59-88, XP055343654, GB ISSN: 0167-7055, DOI: 10.1111/cgf.12671 * section 2.3 * | 1-15 | |

The present search report has been drawn up for all claims

| Place of search | Date of completion of the search | Examiner |
|---|---|---|
| Munich | 30 October 2017 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5645

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2017

| Patent document cited in search report | Publication date | Patent family member(s) | Publication date |
|---|---|---|---|
| US 2009231355 A1 | 17-09-2009 | NONE | |
| US 2012075329 A1 | 29-03-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FRIGO et al.** *Optimal Transportation for Example-Guided Color Transfer,* 2014
- *Regularized Discrete Optimal Transport,* 05 March 2013
- **FERRADANS et al.** *Wasserstein Barycentric Coordinates: Histogram Regression Using Optimal Transport,* 20 April 2016
- **FRIGO.** *Optimal Transportation for Example-Guided Color Transfer,* 2014